# EUROPEAN PATENT APPLICATION

(11) **EP 3 147 195 A2**
(43) Date of publication of application: **29.03.2017**
(21) Application number: 16181034.6
(22) Date of filing: 25.07.2016
(51) Int. Cl.: B62K 25/00, B62K 25/08

(54) **STRADDLED VEHICLE**

(30) Priority: 01.09.2015 JP 2015172076
(71) Applicant: Yamaha Hatsudoki Kabushiki Kaisha, Shizuoka-ken 438-8501 (JP)
(72) Inventor: IGARASHI, Takeshi, Shizuoka-ken, 438-8501 (JP)
(74) Representative: Moreland, David

(57) **Abstract**

A straddled vehicle (1) comprises a vehicle frame (10); a battery (6) attached to the vehicle frame; a steering device (20) pivotable around a steering axial line (sa) with respect to the vehicle frame; a front suspension (30) coupled with the steering device; a front wheel (2) attached to the front suspension so as to be rotatable around an axle (50); a front motor (40) supplied with electric power from the battery to generate motive power; an electric power cable (60) electrically connecting the battery and the front motor with each other; and a restriction mechanism (61) restricting the electric power cable to move in a stroke direction (SD) of the front suspension.

## Description

### FIELD OF INVENTION

The present invention relates to a straddled vehicle. The present invention particularly, though not exclusively, relates to a straddled vehicle comprising a motor, such as an electric motor, for driving a front wheel.

### BACKGROUND TO INVENTION

Recently, it has been proposed to use a motor as a driving source of a motorcycle. In a general motorcycle, a rear wheel is driven by an engine (internal combustion engine). Use of a motor instead of an engine realizes electric drive of a rear wheel. Use of a motor driving a front wheel (hereinafter, referred to as a "front motor") in addition to an engine or a motor driving the rear wheel realizes dual drive (all-wheel drive).

In the case where a front motor is used, the front motor is attached to the front wheel, whereas a battery is generally attached to a vehicle frame. With such a structure, along with a stroke of a front suspension or steering performed by turning a handle, the front motor moves with respect to the battery. Therefore, it is preferable that an electric power cable electrically connecting the front motor and the battery with each other is laid out in consideration of such a relative movement.

Japanese Laid-Open Patent Publication No. 2010-228570 (HONDA) discloses a motorcycle including an engine driving a rear wheel and a motor driving a front wheel (front motor). In the motorcycle disclosed in Japanese Laid-Open Patent Publication No. 2010-228570, the front motor is located in a wheel hub of the front wheel, and an electric power cable connected with the front motor is located along the rear of a front fork. The electric power cable is provided so as to extend, above the front fork, toward the vehicle frame via an area in the vicinity of a head pipe. The electric power cable is sagged in the vicinity of the wheel hub.

It has been found by the studies made by the present Inventor that the above-described layout of the electric power cable causes the following problem in the case where a front motor having a relatively large output is used.

In the motorcycle described in Japanese Laid-Open Patent Publication No. 2010-228570, it appears that the influence of the relative movement at the time of steering is alleviated by a sagging part of the electric power cable. However, in the case where the output of the front motor is to be made large, the voltage supplied from the battery needs to be raised. In accordance with this, the diameter of the electric power cable need to be increased, which decreases the flexibility of the electric power cable. This requires the sagging part of the electric power cable to be enlarged. As can be seen from this, in the case where the layout described in Japanese Laid-Open Patent Publication No.2010-228570 is used, the electric power cable significantly protrudes from the front fork.

Conventionally, there is no layout of the electric power cable proposed in full consideration of the movement of the front motor with respect to the battery.

The present invention made in light of the above-described problem has an object of providing a straddled vehicle, having a front motor that suppresses an electric power cable from protruding from a front suspension.

It is an object of at least one embodiment of at least one aspect of the present invention to obviate or at least mitigate one or more problems or disadvantages in the prior art.

### SUMMARY OF THE INVENTION

Various aspects of the present invention are defined in the independent claims appended hereto. Some optional and/or preferred features are defined in the dependent claims appended hereto.

According to a first aspect of the present invention there is provided a straddled vehicle. The straddled vehicle may comprise a vehicle frame. The straddled vehicle may comprise a battery which may be attached to the vehicle frame. The straddled vehicle may comprise a steering device which may be pivotable around a steering axial line with respect to the vehicle frame. The straddled vehicle may comprise a front suspension which may be coupled with the steering device. The straddled vehicle may comprise a front wheel which may be attached to the front suspension, e.g. so as to be rotatable around an axle. The straddled vehicle may comprise a front motor (e.g. electric motor) which may comprise a stator and/or a rotor which may be rotatable around the axle together with the front wheel. The motor may be supplied (e.g. in use) with electric power from the battery to generate motive power. An electric power cable may electrically connect the battery and the front motor with each other. A restriction mechanism may restrict the electric power cable, e.g. to move in a stroke direction of the front suspension.

The front suspension may comprise a suspension top portion attached to the steering device and/or a suspension bottom portion attached so as to be movable in the stroke direction with respect to the suspension top portion.

The restriction mechanism may comprise a pipe-like guide portion extending parallel to the stroke direction. A part of the electric power cable may be inserted through the guide portion.

The guide portion may be secured to the suspension bottom portion. The guide portion and the electric power cable may integrally move in accordance with a movement of the suspension bottom portion, e.g. with respect to the suspension top portion.

The restriction mechanism may comprise an accommodation portion provided on the suspension top portion. The accommodation portion may accommodate a part of the electric power cable in a sagging (or catenary) state.

The electric power cable may pass the vicinity of the steering axial line to connect the battery and the front motor with each other.

The vehicle frame may comprise a head pipe. The steering device may comprise a steering shaft which may be inserted through the head pipe. The electric power cable may comprise a portion bypassing the head pipe.

The straddled vehicle may further comprise a cover, e.g. covering the portion of the electric power cable bypassing the head pipe.

As seen in a front view of the vehicle, the electric power cable may bridge over a vehicle center line.

The straddled vehicle may further comprise a rear wheel; and may have a rear motor which may generate motive power usable to drive the rear wheel. The battery may supply electric power to the rear motor.

The straddled vehicle may comprise a/the restriction mechanism which may restrict the electric power cable to move in the stroke direction of the front suspension. Therefore, the sag of the electric power cable caused by the movement of the front motor with respect to the battery may be absorbed by the movement of the electric power cable in the stroke direction. This may allow the electric power cable to be located so as not to protrude from the front suspension.

The front suspension may beneficially comprise a suspension top portion attached to the steering device and/or a suspension bottom portion which may be attached so as to be movable in the stroke direction with respect to a/the suspension top portion. In the case where the front suspension is of a telescopic type, one of the suspension top portion and the suspension bottom portion may comprise an outer tube, and the other of the suspension top portion and the suspension bottom portion may comprise an inner tube. Specifically, e.g. in the case where the front suspension is of a normal type, the suspension top portion may comprise an inner tube, and the suspension bottom portion may comprise an outer tube. By contrast, e.g. in the case where the front suspension is of an upside-down type, the suspension top portion may comprise an outer tube, and the suspension bottom portion may comprise an inner tube.

The restriction on the movement of the electric power cable by the restriction mechanism may preferably be realized by an arrangement in which the restriction mechanism may comprise the pipe-like guide portion extending parallel to the stroke direction. A part of the electric power cable may be inserted through the guide portion, and as a result, the electric power cable may be restricted to move in the stroke direction in the guide portion.

The guide portion may be secured to the suspension bottom portion. The guide portion and the electric power cable may move integrally in accordance with the movement of the suspension bottom portion, e.g. with respect to the suspension top portion.

The restriction mechanism may preferably comprise the accommodation portion provided on the suspension top portion and accommodating a part of the electric power cable in a sagging state. Such an accommodation portion acts as an area where the sag of the electric power cable may be absorbed.

The electric power cable may pass the vicinity of the steering axial line and may connect the battery and the front motor with each other. In this case, the electric power cable may comprise a portion bypassing the head pipe or may comprise a portion inserted through the head pipe and the steering shaft.

In the case where the straddled vehicle has a cover covering the portion of the electric power cable bypassing the head pipe, the electric power cable may be prevented or mitigated from being damaged.

In the case where as seen in a front view of the vehicle, the electric power cable bridges over the vehicle center line, the electric power cable may be further suppressed from protruding in a vehicle width direction.

An embodiment of the present invention may preferably be usable for a structure in which the straddled vehicle further comprises a rear motor generating motive power usable to drive the rear wheel and in which the battery may supply electric power also to the rear motor.

According to a second aspect of the present invention, there is provided a straddled vehicle. The straddled vehicle may comprise a front motor. The front motor may suppress an electric power cable from protruding from a front suspension.

It will be appreciated that features analogous to those described in relation to the above aspect or optional features may be individually and separably or in combination applicable to any of the other aspects or optional features.

### BRIEF DESCRIPTION OF DRAWINGS

An embodiment of the present invention will now be described with reference to the accompanying drawings. It will be appreciated that the present invention is not limited to the disclosed embodiment.
- **FIG. 1**: a schematic left side view showing a straddled vehicle 1 (motorcycle) according to an embodiment of the present invention;
- **FIG. 2**: a schematic exploded isometric view showing a front wheel 2 and the vicinity thereof of the motorcycle 1;
- **FIG. 3**: a schematic cross-sectional view showing the front wheel 2 and the vicinity thereof;
- **FIG. 4**: a right side view of the front wheel 2 and the vicinity thereof;
- **FIG. 5**: a left side view of a restriction mechanism 61 of the motorcycle 1;
- **FIG. 6**: a front view of the restriction mechanism 61;
- **FIG. 7**: a bottom view of elements in the vicinity of a steering axial line sa of the motorcycle 1; and
- **FIG. 8**: a schematic isometric view showing elements in the vicinity of the steering axial line sa.

### DETAILED DESCRIPTION OF PREFERRED EMBODIMENTS

An embodiment of the present invention will now be described, by way of example only, with reference to the accompanying drawings. It will be appreciated that the present invention is not limited to the following embodiment.

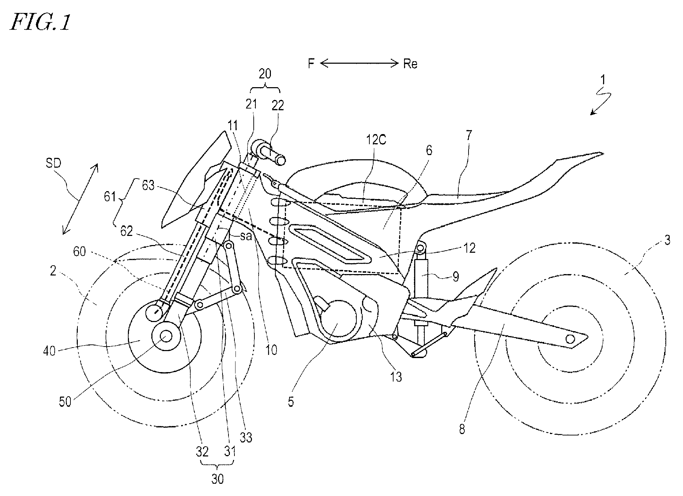

FIG. 1 shows a straddled vehicle according to an embodiment of the present invention. As shown in FIG. 1, the straddled vehicle is an on-road type motorcycle. However, the motorcycle 1 of the present invention is not limited to an on-road type motorcycle 1. The motorcycle 1 according to the present invention may be of any other type, for example, a so-called off-road type, a moped type, a scooter type or the like. The term "straddled vehicle" according to the present invention refers to a vehicle which a rider rides astride, and is not limited to a two-wheeled vehicle. A straddled motorcycle according to an embodiment of the present invention may be, for example, a leaning multi-wheel (LMW), which changes the advancing direction by having the vehicle body inclined, or may be any other type of straddled vehicle such as an ATV (All Terrain Vehicle) or the like.

In this specification, the terms "front", "rear", "left" and "right" respectively mean front, rear, left and right as seen from a rider of the motorcycle 1. In the figures, F, Re, L and R respectively represent front, rear, left and right.

As shown in FIG. 1, the motorcycle 1 comprises a vehicle body frame 10, a steering device 20, a front suspension 30, a front wheel 2 and a rear wheel 3. The motorcycle 1 also comprises a motor 40, e.g. electric motor, generating or providing motive power usable to drive the front wheel 2 (hereinafter, such a motor will be referred to as a "front motor 40"), a motor 5 generating motive power usable to drive the rear wheel 3 (hereinafter, such a motor will be referred to as a "rear motor 5"), and a battery 6 supplying electric power to the front motor 40 and the rear motor 5.
The vehicle frame 10 comprises a head pipe 11 located at a frontmost position of the vehicle frame 10, a battery case 12 and a motor case 13. The battery case 12 and the motor case 13 are located to the rear of the head pipe 11. The vehicle frame 10 supports a seat 7 on which a driver is to sit.

The battery case 12 provided in the vehicle frame 10 accommodates the battery 6. More specifically, the battery 6 is attached to the vehicle frame 10. The battery case 12 is box-shaped and has an opening at a top surface thereof. The top surface of the battery case 12 is covered with a case cover 12C.

The battery 6 is, for example, a lithium-ion battery. The battery 6 may be detachable from the vehicle frame 10. The battery 6 is not limited to being provided in the number of one, and a plurality of (i.e. two or more) batteries 6 may be accommodated in the battery case 12. The battery 6 supplies electric power to both a cable of a low voltage system and a cable of a high voltage system. The cable of the low voltage system supplies electric power to assisting elements such as a lamp, an ECU and the like, and in general, supplies a voltage of about 12 V. The cable of the high voltage system supplies electric power to the front motor 40 and the rear motor 5 (namely, supplies electric power usable to generate driving power), and supplies a voltage higher than the voltage to be supplied by the cable of the low voltage system. The cable of the high voltage system is of a different system from the cable of the low voltage system.

The battery 6 does not need to be directly attached to the vehicle frame 10. In this specification, the expression that "the battery 6 is attached to the vehicle frame 10" encompasses a case where the battery 6 is directly attached to the vehicle frame 10 and a case where the battery 6 is attached to the vehicle frame 10 indirectly (namely, while having a component other than the vehicle frame 10 between the battery 6 and the vehicle frame 10).

The motor case 13 accommodates a rear wheel driving system comprising the rear motor 5. The rear wheel 3 to be driven by the rear motor 5 is attached to a rear arm 8. Motive power generated by the rear motor 5 is transmitted to the rear wheel 3 via a belt or a chain (not shown). A rear suspension 9 is located to the rear of the battery case 12 and the motor case 13. A top end of the rear suspension 9 is attached to a rear wall of the battery case 12. A bottom end of the rear suspension 9 is supported by the motor case 13 via, for example, a link mechanism.

The steering device 20 comprising a steering shaft 21 inserted through the head pipe 11 and a handle 22 attached to a top end of the steering shaft 21. The steering device 20 is pivotable around a steering axial line sa (central axis of the steering shaft 21) with respect to the vehicle frame 10.

The front suspension 30 is coupled with the steering device 20. The front suspension 30 comprises a portion attached to the steering device 20 (hereinafter, such a portion will be referred to as a "suspension top portion 31 ") and a portion attached so as to be movable in a stroke direction SD with respect to the suspension top portion 31 (hereinafter, such a portion will be referred to as a "suspension bottom portion 32").

In the case where the front suspension 30 is of a telescopic type, one of the suspension top portion 31 and the suspension bottom portion 32 comprises an outer tube, and the other of the suspension top portion 31 and the suspension bottom portion 32 comprises an inner tube. In the motorcycle 1 shown in FIG. 1, the front suspension 30 is of an upside-down type. The suspension top portion 31 comprises an outer tube, and the suspension bottom portion 32 includes an inner tube. By contrast, in the case where the front suspension 30 is of a normal type, the suspension top portion 31 comprises an inner tube, and the suspension bottom portion 32 comprises an outer tube.

A link mechanism 33 is attached as bridging the suspension top portion 31 and the suspension bottom portion 32. The link mechanism 33 acts as a detent for the front suspension 30.

An axle 50 is inserted through the front wheel 2. The front wheel 2 is attached to the front suspension 30 so as to be rotatable around the axle 50.

The front motor 40 is located in the vicinity of the front wheel 2. The front motor 40 is supplied with electric power from the battery 6 to generate motive power. As the front motor 40, a DC brushless motor, for example, is preferably usable.

In this embodiment, the front suspension 30 is located only on one side in a vehicle width direction (in the example shown in FIG. 1, the left side of the vehicle). (Namely, there is only one front fork, which is located on the left side of the vehicle, and no front fork is located on the right side of the vehicle.) The front suspension 30 supports, in a cantilever manner, the axle 50 inserted through the front wheel 2 and the front motor 40.

The front motor 40 and the battery 6 are electrically connected with each other by an electric power cable 60. The electric power cable 60 is a cable of a high voltage system (high voltage cable). The electric power cable 60 as the high voltage cable has a diameter of, for example, 5 mm (20 sq) or greater.

The motorcycle 1 in this embodiment also comprises a restriction mechanism 61 restricting the electric power cable 60 to move in the stroke direction SD of the front suspension 30. The restriction mechanism 61 includes a guide portion 62 and an accommodation portion 63 as described below in detail.

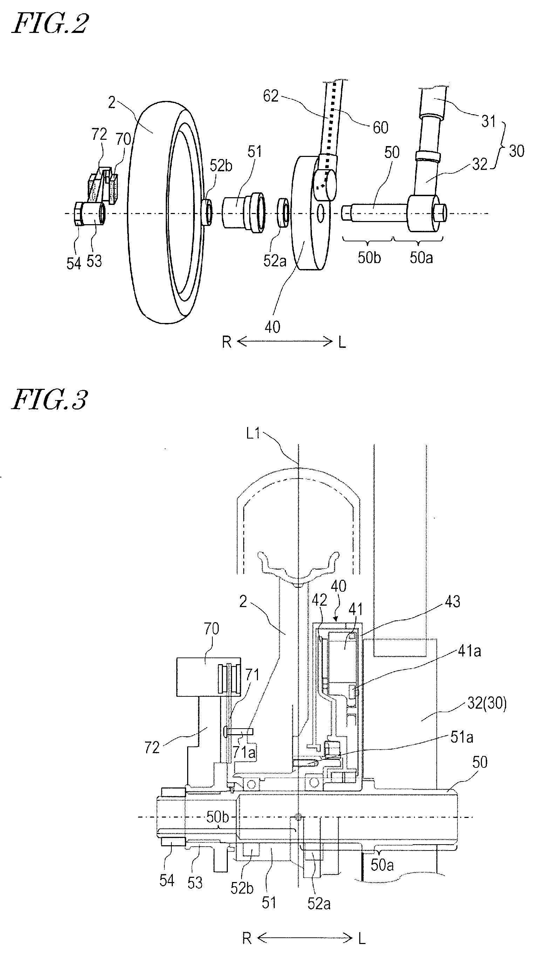

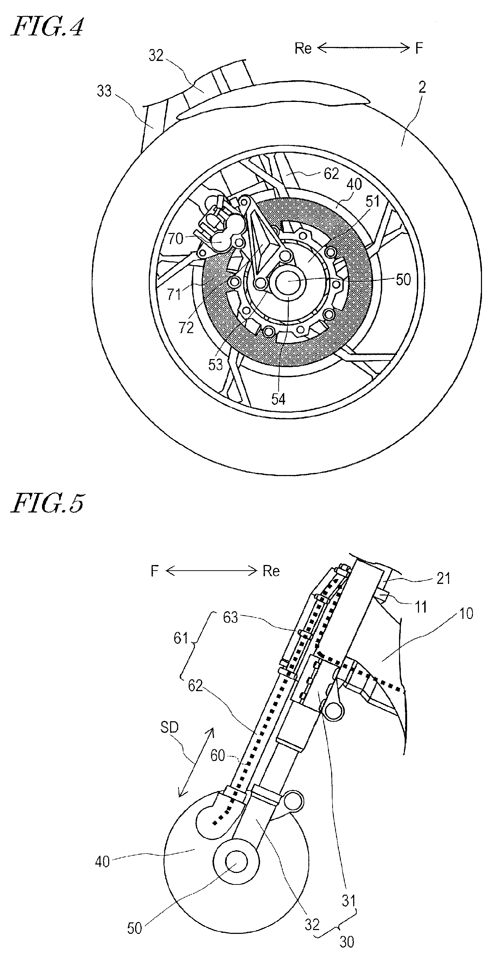

Hereinafter, a specific structure of the front suspension 30 of a cantilever type and the restriction mechanism 61 will be described. First, with reference to FIG. 2, FIG. 3 and FIG. 4, a specific structure of the front suspension 30 of the cantilever type will be described. FIG. 2 is an exploded isometric view of the front wheel 2 and the vicinity thereof, and FIG. 3 is a cross-sectional view of the front wheel 2 and the vicinity thereof. FIG. 4 is a right side view of the front wheel 2 and the vicinity thereof.

As described above, the front suspension 30 supports the axle 50 in a cantilever manner. As shown in FIG. 2 and FIG. 3, as seen in a front view of the vehicle, the axle 50 includes a first portion 50a located in a first direction parallel to the axle 50 with respect to a vehicle center line L1 and a second portion 50b located in a second direction opposite to the first direction with respect to the vehicle center line L1 (see FIG. 3) (in this example, the first direction is a leftward direction L, and the second direction is a rightward direction R). The first portion 50a of the axle 50 is supported by the front suspension 30, whereas the second portion 50b of the axle 50 is not supported by the front suspension 30.

The axle 50 is inserted through a center hub 51 located at a center of the front wheel 2 and through the front motor 40. The center hub 51 is cylindrical and is secured to the front wheel 2 by a bolt 51 a. The axle 50 is rotatably supported in the center hub 51 by a pair of bearings (in this example, ball bearings) 52a and 52b. As seen in a front view of the vehicle, one of the pair of bearings 52a and 52b, specifically, the bearing 52a is located on one side (in this example, the left side of the vehicle) with respect to the vehicle center line L1, and the other bearing 52b is located on the other side (in this example, the right side of the vehicle) with respect to the vehicle center line L1. The center hub 51 does not need to be separate from the front wheel 2, and may be integrally formed with the front wheel 2.

The front motor 40 comprises a stator 41, a rotor 42, and a housing 43 accommodating the stator 41 and the rotor 42. The stator 41 is secured to the housing 43 by a bolt 41 a. The rotor 42 is rotatable around the axle 50 together with the front wheel 2. The rotor 42 is coupled with the center hub 51 via a one-way clutch or a decelerator.

The front motor 40 is located between the front wheel 2 and the front suspension 30. Namely, as seen in a front view of the vehicle, the front motor 40 is supported by the front suspension 30 on the side, with respect to the vehicle center line L1, on which the axle 50 is supported by the front suspension 30 (namely, supported on the side of the first portion 50a).

The front motor 40 is secured to the front suspension 30 and is not attached to the front wheel 2. Specifically, the housing 43 of the front motor 40 and the suspension bottom portion 32 are secured to each other by a key structure, and this arrangement causes the front motor 40 to be secured to the front suspension 30. Needless to say, the structure of securing the front motor 40 to the front suspension 30 is not limited to the above-described structure, and the front motor 40 may be secured to the front suspension 30 by use of a bolt or any of various other structures.

As shown in FIG. 2, FIG. 3 and FIG. 4, the motorcycle 1 further comprises a brake caliper 70 supported by the axle 50 and a brake disc 71 attached to the front wheel 2. The brake disc 71 is tightened to the front wheel 2 by a bolt 71 a.

The brake caliper 70 is supported by the axle 50 via a bracket 72 located between the brake caliper 70 and the axle 50. The bracket 72 is attached to a brake hub 53 located on the opposite side to the front motor 40 and the front suspension 30 with respect to the center hub 51. The brake hub 53 is cylindrical, and the axle 50 is inserted through the brake hub 53. The brake hub 53 is coupled with the axle 50 by serration engagement. Therefore, the bracket 72 attached to the brake hub 53 is considered to have a detent mechanism for the axle 50.

The brake caliper 70 is located on the same side as the front wheel 2 with respect to the front suspension 30. As seen in a front view of the vehicle, the brake caliper 70 is located outer to the front wheel 2 in the vehicle width direction. In other words, as seen in a front view of the vehicle, the front suspension 30 is located on one side with respect to the vehicle center line L1 (in this example, on the left side of the vehicle), whereas the brake caliper 70 is located on the other side (in this example, on the right side of the vehicle) with respect to the vehicle center line L1.

The plurality of elements located in the vicinity of the axle 50 (the front motor 40, the bearings 52a and 52b, etc.) are tightened together by a shaft end nut (tightening member) 54.

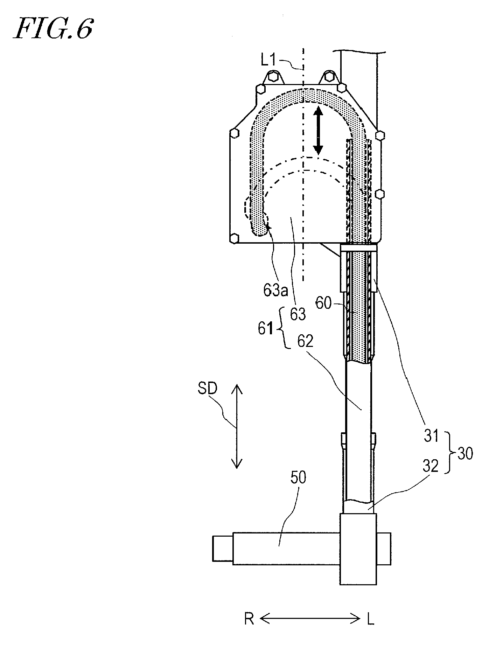

Now, with reference to FIG.5 and FIG.6, a specific structure of the restriction mechanism 61 will be described. FIG. 5 is a left side view of the restriction mechanism 61, and FIG. 6 is a front view of the restriction mechanism 61. In FIG. 5 and FIG. 6, a part of the elements of the motorcycle 1 may be omitted or cut out.

As shown in FIG. 5 and FIG. 6, the restriction mechanism 61 comprises the guide portion 62 and the accommodation portion 63.

The guide portion 62 is pipe-like, and extends parallel to the stroke direction SD. A part of the electric power cable 60 is inserted through the guide portion 62. The guide portion 62 is typically formed of a metal material such as an aluminum alloy or the like.

The guide portion 62 is secured to the suspension bottom portion 32 directly or indirectly. In this embodiment, a bottom end of the guide portion 62 is attached to the front motor 40, and the guide portion 62 is secured to the suspension bottom portion 32 via the front motor 40. The electric power cable 60 is secured to the guide portion 62 at an appropriate position in the guide portion 62 (at one position or a plurality of positions). Therefore, the guide portion 62 and the electric power cable 60 move integrally in the stroke direction SD in accordance with the movement of the suspension bottom portion 32 with respect to the suspension top portion 31.

The accommodation portion 63 is provided on the suspension top portion 31. In the accommodation portion 63, a part of the electric power cable 60 is accommodated in a sagging state. The accommodation portion 63 is box-like, and is typically formed of a metal material (e.g. aluminum alloy). A specific shape of the accommodation portion 63 is not limited to the shape shown in FIG. 6 and the like.

A part (top end) of the guide portion 62 is inserted into the accommodation portion 63 from a left bottom part of the accommodation portion 63, and slides in the accommodation portion 63 along with the stroke of the front suspension 30. The amount of stroke of the front suspension 30 is, for example, 100 mm to 150 mm. One end of the electric power cable 60 is connected with the front motor 40, and the electric power cable 60 extends from the front motor 40 toward the vehicle frame 10 via the guide portion 62, the accommodation portion 63 and an opening 63a at a right bottom part of the accommodation portion 63. As the guide portion 62 slides during the stroke of the front suspension 30, a part of the electric power cable 60 that is inside the accommodation portion 63 and is exposed from the guide portion 62 also moves in the stroke direction SD (see FIG. 6).

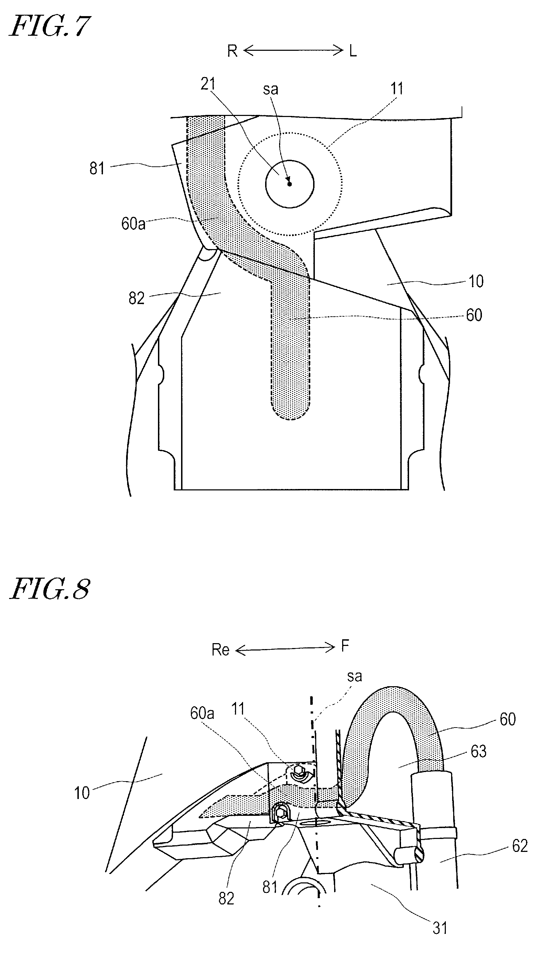

As shown in FIG. 6, as seen from the front of the vehicle, the electric power cable 60 is located as bridging over the vehicle center line L1. As shown in FIG. 1, the electric power cable 60 passes the vicinity of the steering axial line sa and connects the battery 6 and the front motor 40 with each other. FIG. 7 is a bottom view of elements in the vicinity of the steering axial line sa. FIG. 8 is an isometric view of elements in the vicinity of the steering axial line sa.

As shown in FIG. 7 and FIG. 8, the electric power cable 60 comprises a portion 60a bypassing the head pipe 11 (hereinafter, such a portion will be referred to as a "bypass portion 60a"). Covers 81 and 82 are provided so as to cover the bypass portion 60a. The covers 81 and 82 are typically formed of a metal material (e.g. aluminum alloy). In this example, the bypass portion 60a is covered with the two covers 81 and 82. One of the covers 81 and 82, more specifically, the cover 81 is attached to the suspension top portion 31, whereas the other cover 82 is attached to the suspension bottom portion 32. The number and the shape(s) of the covers covering the bypass portion 60a are not limited to those shown herein. The electric power cable 60 may be located so as to be inserted through the head pipe 11 and the steering shaft 21.

As described above, the motorcycle 1 in this embodiment comprises the restriction mechanism 61 restricting the electric power cable 60 to move in the stroke direction SD of the front suspension 30. Therefore, the sag of the electric power cable 60 caused by the movement of the front motor 40 with respect to the battery 6 is absorbed by the movement of the electric power cable 60 in the stroke direction SD. This allows the electric power cable 60 to be located so as not to protrude from the front suspension 30.

The restriction on the movement of the electric power cable 60 by the restriction mechanism 61 is preferably realized by an arrangement in which the restriction mechanism 61 comprises the pipe-like guide portion 62 extending parallel to the stroke direction SD as in this embodiment. A part of the electric power cable 60 is inserted through the guide portion 62, and as a result, the electric power cable 60 is restricted to move in the stroke direction SD in the guide portion 62.

The restriction mechanism 61 preferably comprises the accommodation portion 63 provided on the suspension top portion 31 and accommodating a part of the electric power cable 60 in a sagging state as in this embodiment. The accommodation portion 63 as described above acts as an area where the sag of the electric power cable 60 is absorbed.

As shown in FIG. 7 and FIG. 8, the covers 81 and 82 are provided to cover the portion 60a of electric power cable 60 bypassing the head pipe 11 (bypass portion 60a). The covers 81 and 82 prevent the electric power cable 60 from being damaged.

As shown in FIG. 6, as seen in a front view of the vehicle, the electric power line 60 is located as bridging over the vehicle center line L1. Such an arrangement further suppresses the electric power line 60 from protruding in the vehicle width direction.

The motorcycle 1 in this embodiment comprises the front suspension 30 supporting, in a cantilever manner, the axle 50 inserted through the front wheel 2 and the front motor 40. Namely, the front suspension 30 is of a cantilever type. Therefore, the workability of attaching or detaching the front wheel 2 is improved as compared with in the case where a general front suspension supporting the axle with two forks on both of the left side and the right side is used.

From the point of view of further improving the workability of attaching or detaching the front wheel 2, it is preferable that as shown in FIG. 3 and the like, the front motor 40 is supported by the front suspension 30 on the side, with respect to the vehicle center line L1, on which the axle 50 is supported by the front suspension 30, as seen in a front view of the vehicle. Namely, it is preferable that the front motor 40 is located between the front wheel 2 and the front suspension 30.

In this embodiment, the plurality of elements located in the vicinity of the axle 50 are tightened together by the shaft end nut (tightening member) 54. Such a structure decreases the number of elements.

In this embodiment, the front motor 40 is secured to the front suspension 30 and is not attached to the front wheel 2. Such a structure does not require the front motor 40 to be detached in order to detach the front wheel 2. Therefore, the ease of workability of attaching or detaching the front wheel 2 is further improved.

As shown in FIG. 1 and the like, the motorcycle 1 preferably further comprises the link mechanism 33 acting as a detent for the front suspension 30. The link mechanism 33 prevents the suspension bottom portion 32 from rotating with respect to the suspension top portion 31.

In this embodiment, the bracket 72 comprises a detent structure for the axle 50. Therefore, in the case where the brake caliper 70 is supported by the axle 50 via the bracket 72 (see, for example, FIG. 3), the rotation torque at the time of deceleration is properly received.

From the point of view of the weight balance and the degree of freedom of layout of a driving mechanism, such as the front motor 40 or the like, it is preferable that the brake caliper 70 is located outer to the front wheel 2 in the vehicle width direction as seen in a front view of the vehicle. In other words, it is preferable that as seen in a front view of the vehicle, the front suspension 30 is located on one side with respect to the vehicle center line L1, whereas the brake caliper 70 is located on the other side with respect to the vehicle center line L1.

It is preferable that, as seen in a front view of the vehicle, one of the pair of bearings 52a and 52b, more specifically, the bearing 52a is located on one side with respect to the vehicle center line L1, whereas the other bearing 52b is located on the other wide with respect to the vehicle center line L1. This structure allows the load of the tire to be retained in a divided manner, and therefore, the bearings 52a and 52b are allowed to be decreased in the size and extended in the life.

In the above-described example, the motorcycle 1 comprises the rear motor 5. The present invention is beneficially applicable to a motorcycle having an internal combustion engine (engine) generating motive power usable to drive the rear wheel, instead of the rear motor 5.

In an embodiment according to the present invention, the straddled vehicle including the front motor suppresses the electric power cable from protruding from the front suspension. The embodiment according to the present invention is preferably applicable for various types of straddled vehicles including a motorcycle.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

It will be appreciated that the term straddled vehicle or motor vehicle used herein, and as used in the art, is meant to include at least the following terms also used in the art:
straddle vehicle, straddle-type vehicle or motor vehicle, saddle-straddling type vehicle or motor vehicle, and includes: motorcycles and motorbikes as well as motor tricycles, quad bikes and All Terrain Vehicles (ATVs), scooters, mopeds and snowmobiles.

## Claims

1. A straddled vehicle (1), comprising:
a vehicle frame (10);
a battery (6) attached to the vehicle frame;
a steering device (20) pivotable around a steering axial line (sa) with respect to the vehicle frame;
a front suspension (30) coupled with the steering device;
a front wheel (2) attached to the front suspension so as to be rotatable around an axle (50);
a front motor (40) having a stator (41) and a rotor (42) rotatable around the axle together with the front wheel, the motor being supplied with electric power from the battery to generate motive power;
an electric power cable (60) electrically connecting the battery and the front motor with each other; and
a restriction mechanism (61) restricting the electric power cable to move in a stroke direction (SD) of the front suspension.

2. The straddled vehicle according to claim 1, wherein the front suspension comprises a suspension top portion (31) attached to the steering device and a suspension bottom portion (32) attached so as to be movable in the stroke direction with respect to the suspension top portion.

3. The straddled vehicle according to claim 2, wherein:
the restriction mechanism comprises a pipe-like guide portion extending parallel to the stroke direction; and
a part of the electric power cable is inserted through the guide portion.

4. The straddled vehicle according to claim 3, wherein:
the guide portion is secured to the suspension bottom portion; and
the guide portion and the electric power cable integrally move in accordance with a movement of the suspension bottom portion with respect to the suspension top portion.

5. The straddled vehicle according to any of claims 2 to 4, wherein the restriction mechanism comprises an accommodation portion (63) provided on the suspension top portion, the accommodation portion accommodating a part of the electric power cable in a sagging state.

6. The straddled vehicle according to any of claims 1 to 5, wherein the electric power cable passes the vicinity of the steering axial line to connect the battery and the front motor with each other.

7. The straddled vehicle according to claim 6, wherein:
the vehicle frame has a head pipe (11);
the steering device has a steering shaft (21) inserted through the head pipe; and
the electric power cable has a portion (60a) bypassing the head pipe.

8. The straddled vehicle according to claim 7, further comprising a cover (81,82) covering the portion of the electric power cable bypassing the head pipe.

9. The straddled vehicle according to any of claims 1 to 8, wherein as seen in a front view of the vehicle, the electric power cable bridges over a vehicle center line (L1).

10. The straddled vehicle according to any of claims 1 to 9, further comprising:
a rear wheel (3); and
a rear motor (5) generating motive power usable to drive the rear wheel;
wherein the battery supplies electric power to the rear motor.
